# EUROPEAN PATENT APPLICATION

(11) **EP 2 684 800 A1**
(43) Date of publication of application: **15.01.2014**
(21) Application number: 13176158.7
(22) Date of filing: 11.07.2013
(51) Int. Cl.: B64D 15/12

(54) **System containing an electric heating element and method for installation and use thereof**

(30) Priority: 13.07.2012 US 201261671204 P; 27.11.2012 US 201213685861
(71) Applicant: MRA Systems, Inc., Baltimore, MD 21220 (US); Kelly Aerospace Thermal Systems, LLC, Willoughy, OH 44094 (US)
(72) Inventor: Calder, David Patrick, Baltimore, MD Maryland 21220 (US); Opificius, Julian Alexander, Loves Park, IL Illinois 61111-4766 (US); Fairbert, Mark, Loves Park, IL Illinois 61111-4766 (US); Pederson, Erik Thomas, Willoughby, OH Ohio 44094 (US); Flosdorf, David Cenit, Akron, OH Ohio 44313 (US)
(74) Representative: Williams, Andrew Richard

(57) **Abstract**

A system (14) and method thereof is provided for electrically heating a component (12). The system includes at least one heating element (16) adapted to be adhesively bonded to a surface (30) on the component and means (26) for controlling flow and duration of an electrical current to the heating element from a power supply. The controlling means comprises a first heating cycle for curing an adhesive to bond the heating element to the surface and has a second heating cycle for providing ice protection to the surface.

## Description

### BACKGROUND OF THE INVENTION

The present invention generally pertains to electric resistance heating elements, and more particularly to heating elements used for nacelle and airfoil ice protection on aircraft.

Ice accretion on aircraft airfoils, flight control surfaces, and other aerodynamic (aero) surfaces can cause their shapes and profiles to change, which can interfere with or lead to the loss of control of the an aircraft. In addition, ice accretion on a nacelle or an engine inlet defined by the inlet lip of a nacelle can cause flow disruptions and ice ingestion. For these reasons, aircraft expected to fly in icy conditions or at high altitudes are commonly equipped with ice protection systems that operate to remove ice buildup (de-icing) and/or prevent ice buildup (anti-icing). Such systems may be thermal and may involve electrical heating elements.

Typically, electric resistance heating elements used for nacelle or airfoil protection are attached to the inner or inside mold line side of its aero surface. These elements are often adhesively bonded to the surface using heat and pressure in a cure cycle. Currently, the heat and pressure used to bond the heating elements to a surface are typically provided by an independent external source, such as an oven or autoclave. Such external sources have their own cure cycle controls to achieve an effective bond. Alternatively, the heating elements may be formed as part of the laminated bonded structure of the aero surface during fabrication.

Conventionally, the external sources of heat and pressure used to bond a heating element to an aero surface are large, expensive pieces of capital equipment. Such equipment are often complicated and must be programmed independently to ensure the bonding process is appropriate for the adhesive and the materials being bonded together. Additionally, tools and other pieces of equipment are needed to transport and support various parts of the heating element and aero surface while the bond is being performed.

In addition to being expensive and time-consuming, processes of the type described above may be infeasible if a field repair is required at a location where the equipment and/or the expertise needed for its operation are not readily available.

### BRIEF DESCRIPTION OF THE INVENTION

The present invention provides a system and method for the installation of electric resistance heating elements on a surface, for example, a nacelle inlet lip or other aero surface of an aircraft. In addition, the present invention provides a device adapted for use as a heating element in such a method.

According to a first aspect of the present invention, a system for electrically heating a component includes a heating element adapted to be adhesively bonded to a surface with an adhesive, and means for controlling current flow and current duration to the heating element from a power supply. The controlling means has a first heating cycle adapted to cure the adhesive to bond the heating element to the surface, and has a second heating cycle that is different from the first heating cycle and adapted for providing ice protection to the surface.

According to a second aspect of the present invention, a method for attaching a heating element to a surface includes providing an adhesive on a first side of the heating element and applying the heating element to the surface with the adhesive. While pressure is applied to a second side of the heating element, heat is generated with the heating element to perform a first heating cycle adapted to cure the adhesive, thereby bonding the heating element to the surface. Thereafter a second heating cycle may be performed with the heating element that is different from the first heating cycle and provides ice protection to the surface.

A beneficial effect of this invention is the ability to allow a heating element to be installed and replaced virtually anywhere, without the need for external equipment or heat sources. In addition, the present invention permits the use of software associated with a controller of an ice protection system and temperature control devices within or associated with the heating element to provide controlled heating cycles for the bonding and ice protection functions of the heating element.

Other aspects and advantages of this invention will be further appreciated from the following detailed description.

### BRIEF DESCRIPTION OF THE DRAWINGS

FIG. 1 schematically represents an aircraft engine on which the present invention may be implemented.
FIG. 2 schematically depicts an ice protection system comprising a heating element and a control system therefor.
FIG. 3 schematically represents a more detailed view of a portion of the heating element of FIG. 2.

### DETAILED DESCRIPTION OF THE INVENTION

The present invention generally relates to methods for installing and operating electric heating elements on surfaces. Particularly, this invention relates to electric heating elements and systems capable of providing ice protection to aero surfaces, for example, nacelles, airfoils, wing leading edges, fairings, and other similar components of aircrafts, as part of an ice protection system for an aircraft. However, other applications are foreseeable and therefore the embodiments described herein should not be viewed as limiting the scope of the present invention to aero surfaces.

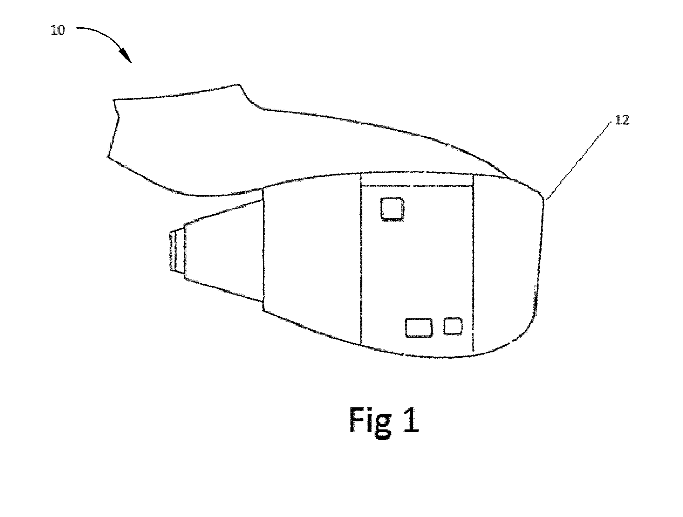

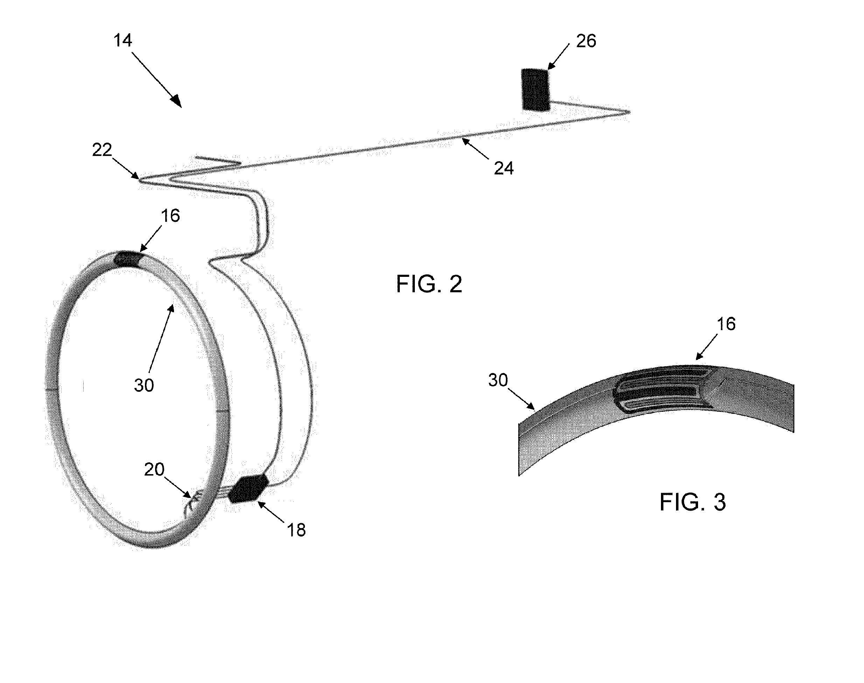

A nonlimiting example of a high-bypass turbofan engine 10 is represented in FIG. 1. Air is ingested into the engine 10 through an engine inlet 12, whose leading edge is defined by the inlet lip of the engine nacelle. The inlet lip 12 is subject to icing conditions while the engine 10 is on the ground and especially under flight conditions. FIG. 2 depicts an ice protection system 14 comprising at least one resistive heating element 16 attached to an inlet lip section 30, such as for the inlet lip 12 of the engine 10 in FIG. 1. FIG. 3 represents a more detailed view of the heating element 16 taken from a reverse angle to FIG. 2. The heating element 16 can be adapted to operate independently from other heating elements (not shown) that can also be mounted to the inlet lip section 30. The section 30 is preferably provided with a sufficient number of heating elements 16 to provide complete coverage for the inlet 12 of FIG. 1. With the heating element 16 secured thereto, the inlet lip section 30 can be positioned at the engine inlet 12 to remove ice buildup (de-icing) and, more preferably, prevent ice buildup (anti-icing).

Suitable designs and materials for the heating element 16 include various electrical heating elements known in the art. The heating element 16 depicted in FIGS. 2 and 3 is representative of a type of exemplary resistive heating element disclosed in U.S. Provisional Application No. 61/671,218. The heating element 16 preferably has an architecture with one or more integrated temperature sensors (not shown), for example, resistance temperature detectors (RTDs), thermocouples, etc., embedded within the heating element 16 to provide a temperature feedback signal.

FIG. 2 further represents a heating control unit (HCU) 18 connected by wiring 20 to the heating element 16 and temperature sensors for the purpose of regulating the heat generated by the element 16 by controlling the level and duration of electric current supplied to the heating element 16. The HCU 18 is represented as further connected to a power harness 22 adapted to connect the HCU 18 to a power supply (not shown), and a second power harness 24 that connects the HCU 18 to a main control unit (MCU) 26. The power supplied to the HCU 18 through the power harness 22 may be, for example, 115 VAC typically available on an aircraft engine of the type represented in FIG. 1. The MCU 26 is preferably a programmable device with resident software adapted to control the HCU 18 and, therefore, the heating element 16. Those skilled in the relevant art have an understanding of such software, which therefore will not be elaborated on further herein. Control signals delivered from the MCU 26 over the harness 24 may be, for example, 28VDC, though higher and lower voltages are foreseeable.

In operation, the MCU 26, HCU 18, heating element 16 and temperature sensors interact to regulate the heat generated by the heating element 16 and, as a consequence, the temperature of the inlet lip section 30 as sensed by the temperature sensors associated with the heating element 16. The level and duration of current supplied to the heating element 16 is regulated by the HCU 18, which in turn is controlled by the MCU 26 with the assistance of the temperature feedback signal.

A preferred aspect of the present invention is a method by which the heating element 16 is bonded to a surface, such as the surface of the inlet lip section 30. More particularly, in addition to controlling the current flow to the heating element 16 to provide the desired anti-icing and de-icing function, the HCU 18 and MCU 26 are adapted to control the heating element 16 in a manner that enables the heating element 16 to generate heat during a cure cycle that is capable of bonding the heating element 16 to the inlet lip section 30. As such, the heating element 16 is adapted to be utilized in both at least one ice protection cycle and a separate and different cure cycle, which are both programmed into the MCU 26. The surface of the heating element 16 that is used to bond the heating element 16 to the inlet lip section 30 (or other suitable surface), more particularly, an inner surface of the inlet lip section 30, is preferably cleaned prior to bonding. A film adhesive (not shown) may be applied to this surface or the inner surface of the inlet lip section 30. Preferred adhesives are composed of a silicone rubber which may include one or more fillers including, but not limited to, ceramics with high thermal conductivity and electrically insulating properties such as Al₂O₃ or SiC. The heating element 16 is then placed against the interior surface of the inlet lip section 30.

A pressure pad (not shown) is preferably placed on the heating element 16 opposite its surface to be bonded. The pressure pad provides proper clamping pressure during the adhesive cure process, preferably between about 15 to 90 psi. The pressure pad may be a very simple device, such as a weight or a vacuum bag. Once sufficient pressure is exerted on the heating element 16, the cure cycle may be performed to bond the heating element 16 to the inlet lip section 30. For this purpose, the heating element 16 can be connected with the same wiring harnesses 22 and 24 to a power supply and the MCU 26 through the HCU 18 to perform the cure cycle as would be used to operate the heating element 16 during engine operation to perform an ice protection (de-icing and/or anti-icing) cycle. During the cure cycle, the adhesive experiences vulcanization and becomes cross-linked or polymerized. Such a bond process preferably involves the application of pressure to the heating element 16, which can be applied by a simple pressure pad, combined with heat generated by the heating element 16 without the need for any additional and extraneous heating source, such as an oven or autoclave. Optimal temperatures, durations, and pressure settings of the cure cycle will depend on the curing properties of the specific adhesive used. As a nonlimiting example, the MCU 26 may be preprogrammed to run a cure cycle in which the heating element 16 is heated to a temperature of about 120°F (about 48°C) for 45 minutes and then ramping up at a controlled rate to 250°F (about 120°C) for 15 minutes, followed by a controlled decrease in temperature to ambient conditions, while under pressure of 45 psi to cure an adhesive film that is positioned between the heating element 16 and inlet lip section 30. After the adhesive has cured, the MCU 26 may be operated to run one or more different programs by which the heating element 16 can perform a de-icing and/or anti-icing function, for example, temperatures of up to 400°F (about 205°C). Preferred de-icing and anti-icing cycles are believed to operate the heating element 16 at a temperature of about 60°F to about 200°F (about 15°C to about 95°C) for durations that can be extended as may be needed to remove and/or inhibit icing on the inlet lip section 30.

Rather than providing constant power to the heating element 16 and thereby maintaining a constant temperature cycle, the de-icing and/or anti-icing cycle power levels are preferably pulsed in order to conserve power. For example, power may be supplied to specific sections of the heating element 16 around the inlet lip section 30 in a sequential pattern rather than the whole heating element 16 at once. Alternatively or in additional to heating alternating sections of the heating element 16, the temperature of the heating element 16 may be increased for a short duration of time to a temperature that is higher than what would be necessary if the heating element 16 were held at a constant temperature.

A cure cycle typically includes four stages. A first stage wherein the temperature is initially increased at a controlled rate, a second stage wherein the temperature is held relatively constant, a third stage wherein the temperature is elevated again and held constant, and a fourth stage with a controlled cool down. Preferably, the temperature of the heating element 16 is increased and cooled at a controlled rate in order to develop acceptable mechanical properties. The second stage and third stage of the cure cycle, wherein the temperature is held constant for a specific dwell time, is generally longer than the de-icing and/or anti-icing cycles. For example, during the de-icing and/or anti-icing cycles, the power may be pulsed rapidly around the inlet lip 30 for ice protection. In contrast, the temperature must be held at a constant temperature for an extended amount of time adequate to properly cure the adhesive during a cure cycle.

While the invention has been described in terms of specific embodiments, it is apparent that other forms could be adopted by one skilled in the art. For example, the ice protection system 14 could differ in appearance and construction from the embodiments shown in the Figures, the functions of each component of the system could be performed by components of different construction but capable of a similar (though not necessarily equivalent) function, and appropriate materials could be substituted for those noted. Therefore, the scope of the invention is to be limited only by the following claims.

Various aspects and embodiments of the present invention are defined by the following numbered clauses:
1. A system for electrically heating a component, the system comprising:
   at least one resistive heating element adapted to be adhesively bonded to a surface of the component; and
   means for controlling flow and duration of an electrical current to the heating element from a power supply, the controlling means having a first heating cycle for curing an adhesive to bond the heating element to the surface and at least a second heating cycle for providing ice protection to the surface.
2. The system according to clause 1, further comprising at least one sensing device for generating and relaying a temperature feedback signal to the controlling means.
3. The system according to any preceding clause, wherein the at least one sensing device is embedded in the heating element.
4. The system according to any preceding clause, wherein the controlling means is programmable.
5. The system according to any preceding clause, wherein the power supply supplies power to the heating element for the first and second heating cycles.
6. The system according to any preceding clause, further comprising a heating control unit adapted to be controlled with the controlling means to regulate the flow and duration of the electrical current to the heating element.
7. The system according to any preceding clause, wherein the controlling means comprises a main control unit adapted to control the heating control unit, the main control unit being a programmable device.
8. The system according to any preceding clause, wherein the main control unit comprises resident software preprogrammed with the first and second heating cycles.
9. The system according to any preceding clause, wherein the main control unit is programmed with a cycle for de-icing and a cycle for anti-icing.
10. The system according to any preceding clause, wherein the heating element is bonded to the surface and the component is an inlet lip of an aircraft engine.
11. The system according to any preceding clause, wherein the heating element is bonded to the surface and the component is chosen from the group consisting of an airfoil, a wing, or a fairing of an aircraft.
12. A method for attaching the system according to any preceding clause, to the surface, the method comprising:
   providing an adhesive on a first side of the heating element;
   applying the heating element to the surface with the adhesive;
   providing pressure on a second side of the heating element;
   operating the controlling means to generating heat with the heating element to cure the adhesive thereby bonding the heating element to the surface; and then
   operating the controlling means to generate heat with the heating element to prevent ice buildup or remove ice from the component.
13. A method comprising:
   providing an adhesive on a first side of a resistive heating element;
   applying the heating element to a surface of a component;
   providing pressure on a second side of the heating element;
   generating heat with the heating element to cure the adhesive thereby bonding the heating element to the surface; and then
   generating heat with the heating element to provide ice protection that prevents ice buildup or removes ice from the component.
14. The method according to any preceding clause, wherein power supplied to operate the heating element is provided by a power supply that supplies electrical current to both bond the heating element and provide ice protection.
15. The method according to any preceding clause, wherein the heating element is bonded to the surface and the component is an inlet lip of an aircraft engine.
16. The method according to any preceding clause, further comprising controlling the generating steps with temperature information received from at least one sensing device.
17. The method according to any preceding clause, wherein the at least one sensing device is embedded in the heating element.
18. The method according to any preceding clause, wherein the heating element is a component of an ice protection system comprising means for controlling flow and duration of an electrical current to the heating element from a power supply.
19. The method according to any preceding clause, further comprising programming the controlling means to store and execute a cure cycle and at least one ice protection cycle.
20. The method according to any preceding clause, wherein the at least one ice protection cycle comprises a de-icing cycle and an anti-icing cycle.

## Claims

1. A system (14) for electrically heating a component (12), the system comprising:
at least one resistive heating element (16) adapted to be adhesively bonded to a surface (30) of the component; and
means (26) for controlling flow and duration of an electrical current to the heating element from a power supply, the controlling means having a first heating cycle for curing an adhesive to bond the heating element to the surface and at least a second heating cycle for providing ice protection to the surface.

2. The system (14) according to claim 1, further comprising at least one sensing device for generating and relaying a temperature feedback signal to the controlling means (26).

3. The system (14) according to claim 2, wherein the at least one sensing device is embedded in the heating element (16).

4. The system (14) according to any of the preceding claims, wherein the controlling means (26) is programmable.

5. The system (14) according to any of the preceding claims, wherein the power supply supplies power to the heating element (16) for the first and second heating cycles.

6. The system (14) according to any of the preceding claims, further comprising a heating control unit (18) adapted to be controlled with the controlling means (26) to regulate the flow and duration of the electrical current to the heating element (16), and preferably wherein the controlling means (26) comprises a main control unit adapted to control the heating control unit (18), the main control unit being a programmable device.

7. The system (14) according to claim 6, wherein the main control unit (26) comprises resident software preprogrammed with the first and second heating cycles.

8. The system (14) according to either of claim 6 or 7, wherein the main control unit (26) is programmed with a cycle for de-icing and a cycle for anti-icing.

9. The system (14) according to any of the preceding claims, wherein the heating element (16) is bonded to the surface and the component (12) is an inlet lip (30) of an aircraft engine.

10. The system (14) according to any of the preceding claims, wherein the heating element is bonded to the surface and the component is chosen from the group consisting of an airfoil, a wing, or a fairing of an aircraft.

11. A method comprising:
providing an adhesive on a first side of a resistive heating element (16);
applying the heating element to a surface (30) of a component (12);
providing pressure on a second side of the heating element (16);
generating heat with the heating element (16) to cure the adhesive thereby bonding the heating element to the surface (20); and then
generating heat with the heating element (16) to provide ice protection that prevents ice buildup or removes ice from the component.

12. The method according to claim 11, wherein power supplied to operate the heating element (16) is provided by a power supply that supplies electrical current to both bond the heating element (16) and provide ice protection.

13. The method according to either of claim 11 or 12, wherein the heating element is bonded to the surface (30) and the component (12) is an inlet lip of an aircraft engine.

14. The method according to any of claims 11 to 14, further comprising controlling the generating steps with temperature information received from at least one sensing device, and preferably wherein the at least one sensing device is embedded in the heating element (16).

15. The method according to claim 12, wherein the heating element (16) is a component of an ice protection system (14) comprising means for controlling flow and duration of an electrical current to the heating element (16) from a power supply, the method preferably further comprising programming the controlling means (26) to store and execute a cure cycle and at least one ice protection cycle.
